(19) Europäisches Patentamt
European Patent Office
Office européen des brevets

(11) Numéro de publication: **0 057 153**
**B1**

(12) **FASCICULE DE BREVET EUROPEEN**

(45) Date de publication du fascicule du brevet: **30.04.86**

(21) Numéro de dépôt: **82420011.7**

(22) Date de dépôt: **21.01.82**

(51) Int. Cl.$^4$: **A 01 N 25/30,** A 01 N 25/04, B 27 K 3/34

(54) **Concentrés émulsionnables de matières biocides, les émulsions aqueuses obtenues à partir d'eux et l'application de ces émulsions au traitement du bois.**

(30) Priorité: **23.01.81 FR 8101418**

(43) Date de publication de la demande:
**04.08.82 Bulletin 82/31**

(45) Mention de la délivrance du brevet:
**30.04.86 Bulletin 86/18**

(84) Etats contractants désignés:
**AT BE CH DE FR GB IT LI LU NL SE**

(56) Documents cités:
**EP-A-0 006 348**
**FR-A-1 067 891**
**FR-A-1 544 172**
**FR-A-2 219 938**
**GB-A- 769 736**
**GB-A-2 040 684**
**US-A-3 054 820**

**Le dossier contient des informations techniques présentées postérieurement au dépôt de la demande et ne figurant pas dans le présent fascicule.**

(73) Titulaire: **XYLOCHIMIE**
**7-11, Boulevard de Courbevoie**
**F-92521 Neuilly-sur-Seine Cedex (FR)**

(72) Inventeur: **Chaux, Jean-Bernard**
**31, Chemin du Grand Bois**
**F-69160 - Tassin la Demi-Lune (FR)**
Inventeur: **Bourdon, Louis**
**40, Chemin des Balmes**
**F-69110-Sainte-Foy lès Lyon (FR)**

(74) Mandataire: **Trolliet, Maurice et al**
**RHONE-POULENC RECHERCHES Service Brevets Chimie et Polymères Centre de Recherches de Saint-Fons B.P. 62**
**F-69192 St-Fons Cédex (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

EP 0 057 153 B1

**Description**

La présente invention concerne des concentrés oraniques liquides émulsionnables renfermant des matières biocides. L'invention concerne également les émulsions aqueuses obtenues après addition d'eau aux dits concentrés. L'invention concerne encore l'emploi desdites émulsions pour assurer la protection du bois contre l'attaque des champignons et/ou des insectes xylophages.

Depuis de nombreuses années, on sait protéger le bois en l'imprégnant superficiellement de substances confgicides et/ou insecticides. La matière active, choisie de préférence insoluble dans l'eau, est dissoute par exemple dans un milieu liquide approprié pour former un concentré. Le milieu de dissolution comprend habituellement un ou plusieurs solvants organiques de la matière active, en mélange éventuellement avec une ou plusieurs huiles et/ou avec un ou plusieurs agent de fixation. Aú moment de son emploi pour imprégner le bois à traiter, le concentré liquide est dilué avec de l'eau et agité de manière à produire une émulsion et c'est cette émulsion qui est appliquée en définitive sur la surface à traiter.

Pour produire de pareilles émulsions, l'emploi de types variés de tensio-actifs, comme agents émulsionnants, a été proposé. Cependant, au vue de la diversité des matières actives et des milieux de dissolution employés pour la préparation des concentrés liquides, la sélection d'un agent émulsionnant adéquat présente une certaine difficulté. Le choix de pareil agent émulsionnant est rendu difficile en effet par l'existence de paramètres à respecter tels que notamment sa compatibilité avec la matière active et avec le milieu de dissolution, sa stabilité dans le milieu de dissolution et dans l'eau, sa solubiité dans le milieu de dissolution et dans l'eau. Il est hautement souhaitable de pouvoir disposer d'un agent émulsionnant qui permette de conduire, au départ de matières actives et de milieux de dissolution les plus variés possibiles, à des concentrés homogènes et stables capables de donner par dilution dans l'eau des émulsions également stables.

Dans le document GB—A—769.736 qui se propose justement d'apporter une contribution à la satisfaction de cet objectif, on propose d'employer comme agent émulsionnant un mélange comprenant 95 à 15% en mole d'un tensio-actif non ionique obtenu par condensation d'un oxyde d'alkylène avec des alkylphénols et 5 à 85% en mole d'un tensio-actif anionique qui est un ester sulfurique ou phosphorique dérivé du tensio-actif précité. Dans ce document on enseigne encore que les tensio-actifs non ioniques et anioniques précités, lorsqu'ils sont employés séparément, donnent des résultats inférieurs à ceux obtenus lorsqu'ils sont employés en mélange.

Poursuivant des travaux dans ce domaine de la technique, la demanderesse a maintenant trouvé, lorsque l'on emploie des matières biocides, dont on ne parle pas dans cet art antérieur, constitutées en tout ou partie par des dérivés halogénés du phénol, qui'il est possible de faire appel uniquement à certains tensio-actifs anioniques qui peuvent être identiques ou différents des composés de cette nature mentionnés dans le brevet anglais cité dans le but d'obtenir des émulsions stables.

Plus spécifiquement, la présente invention a pour objet des concentrés liquides, émulsionnables dans l'eau, qui comprennent:

— une matière active insoluble dans l'eau représentant 15 à 40% du poids des concentrés,

— et un milieu de dissolution liquide constitué par au moins un solvant organique de la matière active représentant 30 à 75% du poids des concentrés, un agent émulsionnant représentant 5 à 25% du poids concentrés et éventuellement au moins une huile et/ou au moins un agent de fixation représentant 0 à 20% en poids des concentrés, les dits concentrés étant caractérisés en ce que:

— la matière active consiste en au moins une substance fongicide choisie parmi les dérivés halogénés du phénol associée éventuellement à au moins une substance insecticide insoluble dans l'eau,

— et l'agent émulsionnant consiste en au moins un tensio-actif anionique appartenant au groupe formé par:

(a) des esters sulfuriques de formule:

$$R—(OCH_2CH_2)_n—OSO_3M \qquad (I)$$

dans laquelle:

le substituant R représente un radical, carboné saturé ou non saturé, pouvant renfermer un ou plusieurs hétéroatomes, d'origine aliphatique (linéaire ou ramifié), cycloaliphatique ou aromatique;

n représente un nombre fixé à une valeur telle que le HLB du tensio-actif corresponde à un nombre allant de 10 à 16;

M est un reste d'origine minérale ou organique choisi de manière à ce que le tensio-actif soit soluble dans le concentré à émulsionner et dans l'eau,

(b) et des esters orthophosphoriques de formule:

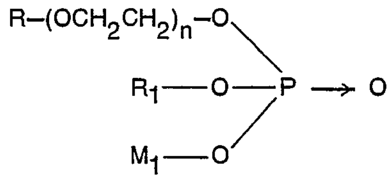

(II)

dans laquelle:

le substituant R et n ont les significations données ci-avant dans la formule (I);

$R_1$ représente soit un reste $M_1$, soit l'un des radicaux $R—(OCH_2CH_2)_n—$, les radicaux $R_1$ et $R—(OCH_2CH_2)_n—$ pouvant être identiques ou différents;

$M_1$ est un atome d'hydrogène ou un reste ayant la signification donnée ci-avant pour M dans la formule (I), les deux restes $M_1$ (quand $R_1=M_1$) pouvant être identiques ou différents.

Le HLB (Balance Hydrophile/Lipophile) est une grandeur bien connue dans le domaine des agents émulsionnants. Pour plus de détail, on peut se reporter à KIRK-OTHMER, Encyclopedia of Chemical Technology, 3e édition, 1979, volume 8, pages 910 à 915.

S'agissant de l'agent émulsionnant, on peut faire appel de préférence aux composés répondant aux formules (I) et (II) dans lesquelles:

le substituant R représente: un radical alkyle linéaire ou ramifié, comportant de 1 à 20 atomes de carbones, éventuellement substitué par un ou plusieurs radicaux alkoxy comportant de 1 à 5 atomes de carbone ou radicaux phényles;

un radical alkylcarbonyle dont le reste alkyle réond à la définition donnée ci-avant;

un radical cycloalkyle comportant de 5 à 8 atomes de carbone, éventuellement substitué comme indiqué ci-avant pour le radical alkyle;

un radical alkylphényle dont le reste alkyle linéaire ou ramifié comporte de 1 à 20 atomes de carbone;

M (formule I) est un reste d'ammonium ou un atome de métal alcalin,

$M_1$ (formule II) est un atome d'hydrogène, un reste d'ammonium ou un atome de métal alcalin.

Dans ce qui précède, on entend par reste d'ammonium un composé de formule: N $(R_2R_3R_4R_5)$ dans laquelle $R_2$, $R_3$, $R_4$ et $R_5$, identiques ou différents, représentent de l'hydrogène, des radicaux alkyles ou des radicaux hydroxyalkyles, deux des radicaux alkyles pouvant former ensemble un radical unique divalent contenant éventuellement un atome d'oxygène. Le nombre total d'atomes de carbone du reste d'ammonium est inférieur ou égal à 6.

Dans ce groupe préféré d'agents émulsionnants, les tensio-actifs de formules (I) et (II) dans lesquelles:

le substituant R représente: un radical alkyle linéaire comportant de 6 à 20 atomes de carbone;

un radical alkylcarbonyle présentant un reste alkyle de même nature;

un radical alkylphényle dont le reste alkyle à une structure linéaire comportant de 6 à 20 atomes de carbone;

M (formule I) est un reste d'ammonium ou un atome de sodium,

$M_1$ (formule II) est un atome d'hydrogène, un reste d'ammonium ou un atome de sodium,
conviennent particulièrement bien.

Les agents émulsionnants qui conviennent tout particulièrement bien sont par exemple les suivants:

(a) s'agissant des sulfates:

$$CH_3—(CH_2)_{10}—CH_2—(OCH_2CH_2)_n—OSO_3NH_4$$

$$CH_3—(CH_2)_{10}—CH_2—(OCH_2CH_2)_n—OSO_3Na$$

$$CH_3—(CH_2)_{11}—CH_2—(OCH_2CH_2)_n—OSO_3NH_4$$

$$CH_3—(CH_2)_{11}—CH_2—(OCH_2CH_2)_n—OSO_3Na$$

$$CH_3—(CH_2)_{12}—CO—(OCH_2CH_2)_n—OSO_3NH_4$$

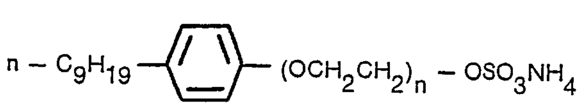

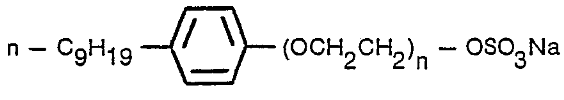

avec n allant de 1 à 10.

(b) s'agissant des phosphates:

$$CH_3—(CH_2)_{10}—CH_2—(OCH_2CH_2)_n—OPO_3\ (M_1)_2$$

$$[CH_3—(CH_2)_{10}—CH_2—(OCH_2CH_2)_n—O]_2PO_2\ M_1$$

$$CH_3—(CH_2)_{11}—CH_2—(OCH_2CH_2)_n—OPO_3\ (M_1)_2$$

$$[CH_3—(CH_2)_{11}—CH_2—(OCH_2CH_2)_n—O]_2PO_2\ M_1$$

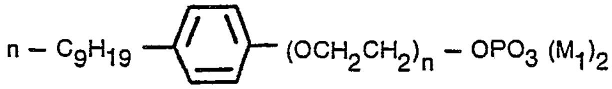

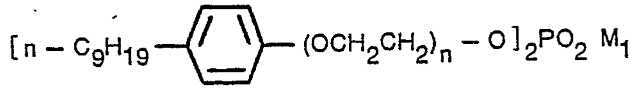

avec n allant de 1 à 10 et les différents restes $M_1$, identiques ou différents, représentant dans chacun de ces composés: H, $NH_4$, $NH_2(C_2H_4OH)_2$, $NH(C_2H_4OH)_3$, Na.

Les agents tensio-actifs de ce type sont connus et décrits par exemple dans KIRK-OTHMER, Encyclopedia of Chemical Technology, 2ème édition, 1966, volume 19, pages 527 à 531.

Il doit être bien entendu que l'on peut utiliser les sulfates de formule (I) séparément ou en mélange. Les phosphates de formule (II) peuvent être utilisés séparément ou plus généralement sous forme de mélanges de monoester avec le diester correspondant. On peut très bien utiliser encore, comme agent émulsionnant, un mélange de sulfate(s) de formule (I) et de phosphate(s) de formule (II). Les proportions relatives de chaque tensio-actif dans leurs mélanges ne sont pas critiques et peuvent varier dans le larges limites.

Le fongicide à utiliser, seul ou en association avec l'insecticide, est un produit connu pour protéger le bois contre l'attaque des champignons et moisissures responsables du bleuissement fongique et de la pourriture telle que notamment la pourriture fibreuse causée par exemple par PHELLINUS MEGALOPORUS, la pourriture cubique causée par exemple par SERPULIA LACRYMANS ou CONIOPHORA CEREBELLA, la pourriture molle causée par exemple par CHAETOMIUM GLOBOSUM. Comme dérivés halogénés du phénol qui conviennent bien pour mettre en oeuvre la présente invention, on citera les dérivés tels que par exemple le tétrachlorophénol et le pentachlorophénol.

L'insecticide à utiliser en association avec le fongicide, est un produit connu pour protéger le bois contre l'attaque des insectes xylophages tels que notamment les termites, les capricornes, les vrillettes, les lyctus. A titre de composés qui conviennent bien pour mettre en oeuvre la présente invention, on citera: des composés organo-halogénés, tels que par exemple le DDT (dichloro diphényl trichloro-éthane), le méthoxychlore (diméthoxy diphényl trichloroéthane), le lindane (isomère γ de l'hexachlorocyclohexane), le chlordane (octachlorohexahydro méthano indène), l'aldrine (endo hexachloro hexahydrodiméthano naphtalène), le toxaphène; des composés organo-phosphorés, tels que par exemple le diéthion (O,O,O',O'-tétraéthyl S,S'-méthylènedithiophosphate), le parathion (O,O-diéthyl paranitrophénylthiophosphate), la phosalone (O,O-diéthyl dithiophosphorylméthyl-3-chloro-6 benzoxazolone); des carbamates, tels que par exemple le sevin (N-méthylcarbamate de naphtyle), le carbofuran (N-méthylcarbamate de diméthyl-dihydrobenzofurannyle); des pyréthrinoïdes de synthèse, tels que par exemple la décaméthrine (α-cyano phénoxybenzyl dibromovinyl diméthylcyclopropane carboxylate), la perméthrine (phénoxybenzyl cis-trans diméthyl dichlorovinyl cyclopropane carboxylate), le fenvalérate (α-cyano phénoxybenzyl chlorophényl méthylbutylbutyrate).

Nous rappelons que l'on peut faire appel dans la présente invention à un mélange de deux ou de plus de deux fongicides ou à une association de plusieurs fongicides avec plusieurs insecticides.

Une matière active particulièrement intéressante pour la mise en oeuvre de la présente invention est constitutée par l'association de:

— 70% à 98% en poids de fongicide(s) constitué(s) par: du tétrachlorophénol et/ou du pentachlorophénol,

— avec 30% à 2% en poids d'insecticide(s) constituté(s) par: du lindane et/ou de phosalone et/ou du sevin et/ou de la perméthrine et/ou du fenvalérate.

La matière active biocide, qui se présente sous une forme solide ou quelque fois liquide, est dissoute habituellement dans le milieu de dissolution en chauffant l'ensemble, sous agitation, à une température de l'ordre de 50° à 90°C. Le milieu de dissolution comprend rappelons le, outre l'agent émulsionnant défini ci-avant, un solvant (ou un mélange de solvants) en mélange éventuellement avec une huile (ou des huiles) et/ou un agent (ou des agents) de fixation.

Parmi les solvants utilisables, on peut citer notamment: les hydrocarbures aromatiques, liquides tels que par exemple le chlorobenzène, le dichlorobenzène, le toluène, les xylènes ou des mélanges d'hydrocarbures aromatiques provenant directement de la distillation du pétrole comme les lampants qui sont des coupes de distillation comprises dans un intervalle de températures de 150° à 300°C; des monoalcools, tels que par exemple le cyclohexanol; des glycols ou polyols ou leurs éthers d'alcanols, tels

que par exemple l'éthylèneglycol, le diéthylèneglycol, le propylèneglycol, les butylèneglycols, l'hexylèneglycol, le diglyme, le butoxyéthanol; des cétones aliphatiques, tels que par exemple l'éthylamylcétone, la di-isobutylcétone; des esters, tels que par exemple les phtalates de butyle ou de nonyle, les succinates, adipates, oxalates, malonates de diméthyle ou de diéthyle; des amides, tels que par exemple le diméthylformamide ou le diméthylacétamide. Il doit être entendu que l'on peut utiliser un solvant unique ou un mélange de deux ou de plus de deux solvants.

Les mélanges de solvants qui conviennent bien pour la mise en oeuvre de la présente invention sont constitués par les mélanges: d'un hydrocarbure aromatique (ou d'un mélange d'hydrocarbures aromatiques) avec un monoalcool ou un glycol ou une cétone ou un ester. Dans ce groupe préféré de mélanges, les mélanges d'un hydrocarbure aromatique chloré (comme le dichlorobenzène) avec un glycol (comme l'hexylèneglycol) ou les mélanges d'une coupe basse de distillation du pétrole (comme les lampants) avec une cétone (di-isobutylcétone) conviennent particulièrement bien. Les proportions relatives de chaque solvant dans leurs mélanges ne sont pas critiques et peuvent varier dans le larges limites. Plus précisement on utilise des mélanges renfermant 40% à 60% en poids d'hydrocarbure(s) aromatique(s) et 60% à 40% en poids de monoalcool, de glycol, de cétone ou d'ester.

Comme huile(s) que l'on peut utiliser pour confectionner le milieu de dissolution, on peut citer notamment: une huile végétale comme par exemple l'huile de lin, l'huile de soja, l'huile de pin, le tallöl, un mélange de terpinéols; une huile minérale comme par exemple l'huile de spindle qui est une fraction de distillation du pétrole intermédiaire entre les lampants et les paraffines.

Comme on l'a dit, le milieu dissolution peut aussi comprendre un ou des agents adhésifs propres à fixer l'agent de traitement sur le bois. On citera par exemple: l'amidon; la carboxyméthylcellulose; la colophane ou des esters de colophane; la gomme arabique; l'alcool polyvinylique; l'acide humique; les résines glycérophtaliques, les résines dites d'hydrocarbures composées de bas polymères d'hydrocarbures insaturés aliphatiques et/ou aromatiques issus du craquage de fractions pétrolières riches en indène.

Un milieu de dissolution particulièrement intéressant pour la mise en oeuvre de la présente invention est celui renfermant, à côté de l'agent émulsionnant, un des mélanges de solvants précités en association avec un ou plusieurs agents de fixation, de préférence un ester de colophane.

Un autre milieu de dissolution utilisable pour la mise en oeuvre de la présente invention est celui renfermant, à côté de l'agent émulsionnant, un solvant unique (de préférence un monoalcool, un glycol, une cétone ou un ester) en association avec un mélange d'une ou plusieurs huiles (de préférence une huile végétale) avec un ou plusieurs agents de fixation (de préférence un ester de colophane). Les proportions d'huile(s) que l'on utilise alors représentant en générale 10% à 50% du poids du mélange huile(s) + agent(s) de fixation.

On peut très bien ajouter dans les concentrés liquides conformes à la présente invention des pigments et/ou des colorants en vue de teinter le bois à traiter.

Une propriété intéressante des concentrés liquides selon la présente invention réside dans leur dispersion (ou leur émulsion) quasi instantanée une fois qu'ils sont ajoutés à l'eau. Généralement l'émulsion est préparé en mélangeant 1 partie en volume de concentré avec 1 à 10 parties en volume d'eau et en soumettant ce mélange à une simple agitation de manière connue en soi.

En plus de leur dispersion rapide, les concentrés selon l'invention donnent des émulsions stables dans l'eau dure comme dans l'eau douce. En outre, toute séparation se produisant dans l'émulsion après un long repos epeut être aisément redispersée par agitation.

Les émulsions obtenues conviennent pour le traitement du bois ainsi que pour celui des dérivés du bois comme les contreplaqués, panneaux de fibres, panneaux de particules et articles composites divers à base de matériaux cellulosiques. Elles peuvent être appliquées par badigeonnage du bois à traiter, à la brosse, au pinceau, au rouleau ou au pistolet ou par trempage du bois à traiter dans l'émulsion. Elles peuvent encore être appliquées par imprégnation en autoclave.

La quantité d'émulsion qui est appliquée va dépendre de divers facteurs. En particulier, elle va dépendre du type de protection recherchée: il peut s'agir d'une protection préventive sur un bois sain, mais il peut s'agir aussi d'une protection curative sur un bois attaqué par des champignons et/ou des insectes xylophages et dans ce deuxième cas la quantité de matière active à déposer sera plus importante. La quantité d'émulsion va dépendre encore de l'imprégnabilité du bois. Lorsque l'on choisit de faire une application par badigeonnage ou par trempage, la quantité d'émulsion utilisée, expirmée, en grammes de matière active (fongicide(s) et éventuellement insecticde(s)) par $m^2$ de surface à traiter, est comprise en générale entre 1 et 30 $g/m^2$. Lorsque l'on choisit de faire une application par imprégnation en autoclave, la quantité d'émulsion utilisée, exprimée en grammes de matière active par $m^3$ de bois à traiter, est comprise en général entre 300 et 3 000 $g/m^3$.

Ces émulsions peuvent encore être introduites dans les colles ou les particules utilisées pour la fabrication des contreplaqués, panneaux de fibres ou de particules. La diffusion de la matière active est correctement assurée, en cours de fabrication, au cours du pressage à chaud de ces articles.

Les exemples qui suivent, donnés à titre non limitatif, illustrent l'invention et montrent comment elle peut être mise en pratique.

Exemple 1

Dans cet exemple, on décrit la préparation de l'agent émulsionnant de formule:

$$CH_3—(CH_2)_{11}—CH_2—(OCH_2CH_2)_3—OSO_3NH_4$$

qui sera utilisé dans les exemples 2 et 3 suivants.

Dans un autoclave, on charge 70,5 parties en poids du produit de condensation d'une mole d'alcool tridécyclique avec 3 moles d'oxyde d'éthylène. Le contenu de l'autoclave, placé sous azote, est chauffé à 80°C, puis on lui ajoute en 1 heure 20,6 parties en poids d'acide sulfamique. La température du milieu réactionnel est portée à 130°C en 1 heure et on maintient la température à cette valeur pendant 2 autres heures, puis on refroidit. C'est le produit ainsi obtenu qui est utilisé comme agent émulsionnant. La valeur du HLB est égale à 11.

Exemple 2

Dans cet exemple, on décrit un concentré émulsionnable conforme à la présente invention et un essai sur bois effectué à l'aide d'une émulsion aqueuse préparée à partir de ce concentré.

1) *Concentré émulsionnable:*

Il présente la composition pondérale suivante:

21,9% de pentachlorphénol,
4,4% de lindane,
24,6% d'orthodichlorobenzène,
28% d'hexylèneglycol
8,8% d'ester de colophane et de penta-érythrol commercialisé par la Société dite Dérivés Résiniques et Terpéniques sous la dénomination DERTOLINE P,
12,3% de l'agent émulsionnant préparé à l'exemple 1.

Pour préparer ce concentré, on charge dans un dissoluteur équipé d'un système d'agitation, d'un système de chauffage et des annexes classiques relatifs à ce type d'appareillage, les divers ingrédients définis ci-avant. On agite ce mélange tout en le portant à une température de l'ordre de 60° à 70°C, de manière à assurer la dissolution complète des matières actives solides engagées.

Le concentré émulsionnable obtenu présente à 20°C une densité de 1,142. Il est très stable: à −3°C, il ne cristallise pas et à 55°C, après plusieurs jours à cette température, on ne note aucun dépôt sur le fond du récipient qui le contient.

2) *Emulsion:*

Elle est préparée en mélangeant 1 partie en volume de concentré avec 7,3 parties en volume d'eau (émulsion à 12% en volume). On obtient ainsi une émulsion de traitement qui renferme au litre: 30 g de pentachlorophénol et 6 g de lindane.

A propos de cette émulsion, on a noté la spontanéité de la formation de l'émulsion par simple agitation après addition d'eau dans le concentré.

La stabilité de cette émulsion est très bonne. Un test de stabilité a été effectué conformément à la norme WHO/M/13 qui se trouve dans l'ouvrage intitulé "Specifications for pesticides used in public health" et édité en 1973 par la World Health Organization (Genève). Ce test consiste à mesurer dans des conditions déterminées l'importance de la séparation d'une émulsion ou la quantité de crème qui se forme après repos de l'émulsion. L'absence de séparation ou de crème après un repos de 1 heure à 30°C traduit une très bonne stabilité de l'émulsion. C'est ce que nous avons observé dans le présent exemple.

3) *Essai sur bois:*

Il s'agit d'un essai d'efficacité de l'émulsion à propos de la protection de la surface du bois contre le bleuissement fongique.

Les conditions de réalisation de l'essai sont conformes à la norme française T 72.085 adoptée par l'AFNOR en décembre 1976.

On traite une série de 3 éprouvettes en bois de pin sylvestre, de dimensions 110 mm × 40 mm × 10 mm, par badigeonnage à l'aide de l'émulsion préparée ci-avant. Le traitement intervient uniquement sur une seule des grandes faces de chaque éprouvette. La quantité d'émulsion appliquée sur chaque éprouvette, exprimée en millilitres par $m^2$, est de 200 ml/$m^2$.

Les éprouvettes sont séchées ensuite pendant 2 semaines à 20°C sous ventilation réduite puis elles sont stérilisées par irradiation au rayonnement X.

Les éprouvettes séchées et stérilisées sont alors exposées dans des récipients d'essai appropriés à l'action d'une culture mixte de 2 champignons responsables de bleuissement du bois: AUREOBASIDIUM PULLULANS et SCLEROPHOMA PITYOPHILA. Ces champignons sont utilisés sous forme d'une suspension de spores et c'est la granoe face non traitée de chaque éprouvette qui se repose entièrement sur la suspension de spores.

La durée de l'essai est de 6 semaines à compter de l'ensemencement des éprouvettes; le récipient d'essai est conditionné à 24°C ± 1°C, l'humidité relative étant de 70% ± 5%.

Après 6 semaines d'ensemencement, on examine visuellement la surface traitée de chaque éprouvette pour y déceler la présence de bleuissement. Le bleuissement de surface est exprimé en utilisant le système de cotation suivant:

0 = pas de bleuissement,
1 = traces de bleuissement,
2 = bleuissement: la surface est bleuie au plus sur un tiers sous forme de taches ou bandes,
3 = fort bleuissement: la surface est bleuie sur plus de un tiers.

On procéde aussi à l'examen interne de la face traitée des éprouvettes sans bleuissement. Chaque éprouvette est découpée dans le sens transversal et sur chaque section on détermine à l'aide d'une loupe la profondeur de bois à partir de la surface qui n'a pas bleui, en trois endroits. On indique: la profondeur moyenne de bois qui n'a pas bleui sur l'ensemble de l'éprouvette ainsi que la profondeur minimale.

Les résultats obtenus sont rassemblés dans le tableau suivant:

| Eprouvette | Bleuissement de surface | Zone interne qui n' a pas bleui | |
|---|---|---|---|
| | | moyenne | minimum |
| 1 | 0 | 1,6 mm | 0,9 mm |
| 2 | 0 | 0,9 mm | 0,5 mm |
| 3 | 0 | 0,8 mm | 0,5 mm |
| Eprouvettes témoins (3) non traitées | 3 | 0 mm | 0 mm |

Exemple 3

Dans cet exemple on décrit un autre concentré émulsionnable conforme à la présente invention ainsi qũe des essais sur bois effectués à l'aioe d'une émulsion aqueuse issue dudit concentré.

1) *Concentré émulsionnable:*

Il présente la composition pondérale suivante:
21,6% de pentachlorophénol,
4,3% de lindane,
20,7% d'une coupe de distillation du pétrole comprise dans un intervalle de température de 225°C à 285°C, commercialisée par la Société Esso-Chimie sous la dénomination SOLVESSO 200,
27,9% de di-isobutylcétone,
12% d'ester de colophane et de glycérol, commercialisé par la Société dite Dérivés Résiniques et Terpéniques sous la dénomination DERTOLINE SG,
13,5% de l'agent émulsionnant préparé à l'exemple 1.

Le concentré obtenu présente à 20°C une densité de 1,04.

2) *Emulsion:*

Elle est préparée en mélangeant 1 partie en volume de concentré avec 6 parties en volume d'eau (émulsion à 14,3% en volume). On obtient ainsi une émulsion de traitement qui renferme au litre: 32,1 g de pentachlorophénol et 6,4 g de lindane. Cette émulsion présente par ailleurs les mêmes qualités que l'émulsion de l'exemple 2.

3) *Essais sur bois:*

3.1. Détermination de l'efficacité préventive contre des larves récemment écloses de capricornes (HYLOTRUPES BAJULUS).

Les conditions de réalisation de l'essai sont conformes à la Norme Européenne EN 46-première édition — 1976 — adoptée par le Comité Euoropéen de Normalisation (CEN) le 25 Aout 1976.

Des éprouvettes en bois de pin sylvestre, de dimensions 50 mm × 25 mm × 15 mm, sont traitées chacune par trempage dans l'émulsion définie ci-avant. Le temps de trempage est de 10 secondes. On détermine pour chaque éprouvette traitée la teneur de matière active retenue par unité de surface du bois.

Les éprouvettes traitées sont réparties en 3 séries comprenant chacune 6 éprouvettes:

série N° 1: les éprouvettes traitées ne subissent aucun vieillissement,

série N° 2: les éprouvettes traitées subissent un vieillissement d'un mois à l'extérieur en étant disposées sur des chassis inclinés à 45° et orientés nord-ouest,

série N° 3: les éprouvettes traitées subissent un double vieillissement: celui des éprouvettes de la série N° 2 + un vieillissement en appareil GERSONDE qui est un tunnel ventilé (vitesse: 1 $ms^{-1}$) et chauffé (40°C).

Les éprouvettes traitées et éventuellement vieillies sont ensuite mises en contact pendant 4 semaines avec des larves récemment écloses de capricornes. Le nombre de larves par éprouvette traitée est de 10. Chaque série d'éprouvettes est donc mises en contact avec 60 larves.

Après 4 semaines de contact avec les larves, on examine les éprouvettes afin de se rendre compte du forage résultant de l'attaque du bois par les larves et de la mortalité des larves. Les larves qui ont foré laissent oerrière elles, à l'entrée ou forage, une petite quantité de farine de bois. Par ailleurs, les larves mortes sont, au bout de 4 semaines, entièrement desséchées et de couleur foncée.

L'évaluation de l'attaque est effectuée en comptant: le nomore de larves mortes n'ayant pas foré; le nombre de larves mortes ayant foré; le nombre de larves vivantes ayant foré.

Les résultats obtenus sont rassemblés dans le tableau suivant:

| Eprouvettes | Matiere Active Absorbee Par Unite De Surface Du Bois Valeur Moyenne En g/m$^2$ | | Larves Retrouvees | | |
|---|---|---|---|---|---|
| | | | Mortes | | Vivantes ayant foré |
| | Pentachloro-phénol | Linoane | n'ayant pas foré | ayant foré | |
| Série No. 1 | 2,2 | 0,45 | 60 | 0 | 0 |
| Série No. 2 | 2,2 | 0,45 | 60 | 0 | 0 |
| Série No. 3 | 2,2 | 0,45 | 29 | 31 | 0 |

3.2. Détermination de l'efficacité préventive contre les termites (RETICULITERMES SANTONENSIS).

Le conditions de réalisation de l'essai sont conformes au projet de Norme Européenne EN 118 — première édition de Juillet 1980.

Des éprouvettes en bois de pin sylvestre, de dimensions 200 mm × 40 mm × 10 mm, sont traitées chacune par badigeonnage à l'aide chaque fois de la même quantité de l'émulsion définie ci-avant. On détermine pour chaque éprouvette traitée la teneur de matière active retenue par unité de surface ou bois.

Les éprouvettes traitées sont réparties en 3 séries de 6 éprouvettes: les éprouvettes de la série N° 1 ne subissent aucun vieillissement; les éprouvettes des séries 2 et 3 subissent les mêmes épreuves de vieillissement que précédemment.

Les éprouvettes traitées et éventuellement vieillies sont ensuite mises en contact pendant 8 semaines avec les termites dans les conditions prévues par la norme. Chaque éprouvette est soumise à l'attaque d'une colonie de termites constitutée par 250 ouvriers, 15 nymphes et 8 soloats. La colonie de termites est installée dans un tube dont l'une des extrémités est scellée, tandis que l'autre, ouverte, est posée sur l'une des grandes faces de l'éprouvette.

Après 8 semaines de contact avec les termites, on compte les termites vivants qui se trouvent dans le tube. On détermine ensuite le taux de survie des ouvriers et note la présence de soldats et/ou de nymphes vivants.

On examine aussi la face de l'éprouvette mise en contact avec le tube et détermine la profondeur des attaques éventuelles subies. Les attaques de la surface exposée sous le tube sont exprimées en utilisant le système de cotation suivant:

0 = aucune attaque,
1 = tentative d'attaque,
2 = attaque légère,
3 = attaque moyenne,
4 = attaque forte.

Les résultats obtenus sont rassemblés dans le tableau suivant:

| Serie No. | Retention De Matiere Active | | Survie Des Termites | | Degre De L'attaque |
|---|---|---|---|---|---|
| | Lindane g/m² | pentachloro-phénol g/m² | ouvriers % | soldats (S) nymphes (N) | |
| 1 | 0,97 | 4,83 | 0 | — | 0 |
| | 0,97 | 4,83 | 0 | — | 0 |
| | 1,01 | 5,06 | 0 | — | 0 |
| | 1,01 | 5,06 | 0 | — | 0 |
| | 1,04 | 5,18 | 0 | — | 1 |
| | 1,04 | 5,18 | 0 | — | 0 |
| 2 | 0,97 | 4,83 | 0 | — | 0 |
| | 0,97 | 4,83 | 0 | — | 0 |
| | 1,01 | 5,06 | 0 | — | 0 |
| | 1,01 | 5,06 | 0 | — | 0 |
| | 1,04 | 5,18 | 0 | — | 0 |
| | 1,04 | 5,18 | 0 | — | 0 |
| 3 | 0,92 | 4,61 | 0 | — | 0 |
| | 0,92 | 4,61 | 0 | — | 1 |
| | 0,99 | 4,93 | 0 | — | 0 |
| | 0,99 | 4,93 | 0 | — | 0 |
| | 1,02 | 5,09 | 0 | — | 0 |
| | 1,02 | 5,09 | 0 | — | 1 |
| Eprouvettes Témoin non traitées (18 éprouvettes) | | | 60 à 72% | N et S | 4 pour toutes les éprouvettes |

## Revendications

1. Concentrés liquides, émulsionnables dans l'eau, qui comprennent:

— une matière active insoluble dans l'eau représentant 15 à 40% du poids des concentrés,

— et un milieu de dissolution liquide constitué par au moins un solvant organique de la matière active représentant 30 à 75% du poids des concentrés, un agent émulsionnant représentant 5 à 25% du poids concentrés et éventuellement au moins une huile et/ou au moins un agent de fixation représentant 0 à 20% en poids des concentrés, lesdits concentrés étant caractérisés en ce que:

— la matière active consiste en au moins une substance fongicide choisie parmi les dérivés halogénés du phénol associée éventuellement à au moins une substance insecticide insoluble dans l'eau,

— et l'agent émulsionnant consiste en au moins un tensio-actif anionique appartenant au groupe formé par:

(a) des esters sulfuriques de formule:

$$R\text{—}(OCH_2CH_2)_n\text{—}OSO_3M \qquad (I)$$

dans laquelle:

le substituant R représente un radical, carboné saturé ou non saturé, pouvant renfermer un ou plusieurs hétéroatomes, d'origine aliphatique (linéaire ou ramifié), cycloaliphatique ou aromatique;

n représente un nombre fixé à une valeur telle que le HLB du tensio-actif corresponde à un nombre allant de 10 à 16;

M est un reste d'origine minérale ou organique choisi de manière à ce que le tensio-actif soit soluble dans le concentré à émulsionner et dans l'eau,

(b) et des esters orthophosphoriques de formule:

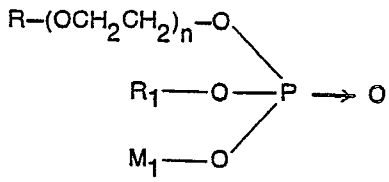

(II)

dans laquelle:

le substituant R et n ont les significations données ci-avant dans la formule (I);

$R_1$ représente soit un reste $M_1$, soit l'un des radicaux $R—(OCH_2CH_2)_n—$, les radicaux $R_1$ et $R—(OCH_2CH_2)_n—$ pouvant être identiques ou différents;

$M_1$ est un atome d'hydrogène ou un reste ayant la signification donnée ci-avant pour M dans la formule (I), les deux restes $M_1$ (quand $R_1=M_1$) pouvant être identiques ou différents.

2. Concetrés selon la revendication 1, caractérisés en ce que l'on fait appel, comme agent émulsionnant, aux composés de formules (I) et (II) dans lesquelles:

le substituant R représente: un radical alkyle linéaire comportant de 6 à 20 atomes de carbone;

un radical alkylcarbonyle présentant un reste alkyle de même nature;

un radical alkylphényle dont le reste alkyle a une structure linéaire comportant de 6 à 20 atomes de carbone,

M (formule I) est un reste d'ammonium ou un atome de sodium,

$M_1$ (formule II) est un atome d'hydrogène, un reste d'ammonium ou un atome de sodium.

3. Concentrés selon l'une quelconque des revendications 1 et 2, caractérisés en ce que la matière active est constitutée par l'association de:

— 70% à 98% en poids de fongicide(s) constitué(s) par: du tétrachlorophénol et/ou du pentachlorophénol,

— avec 30% à 2% en poids d'insecticide(s) constituté(s) par: du lindane et/ou de phosalone et/ou du sevin et/ou de la perméthrine et/ou du fenvalérate.

4. Concetrés selon l'une quelconque des revendications 1 à 3, caractérisés en ce que le solvant ou les solvants de la matière active sont pris dans le groupe formé par: les hydrocarbures aromatiques liquides ou des mélanges d'hydrocarbures aromatique provenant directement de la distillation du pétrole; des monoalcools, des glycols ou polyols ou leurs éthers d'alcanols; des cétones aliphatiques; des esters; des amides.

5. Concentrés selon la revendication 4, caractérisés en ce que l'on fait appel à des mélanges d'un hydrocarbure aromatique (ou d'un mélange d'hydrocarbures aromatiques) avec un monoalcool ou un glycol ou une cétone ou un ester.

6. Concentrés selon l'une quelconque des revendications 1 à 3 et 5, caractérisés en ce que le milieu de dissolution renferme, à côté de l'agent émulsionnant, un des mélanges de solvants visés à la revendication 5 et un ou plusieurs agents de fixation.

7. Concentrés selon l'une quelconque des revendications 1 à 4, caractérisés en ce que le milieu de dissolution renferme, à côté de l'agent émulsionnant, un des solvants visés à la revendication 4 en association avec un mélange d'une ou plusieurs huiles avec un ou plusieurs agents de fixation.

8. Emulsions stables caractérisées en ce qu'elles sont préparées par simple agitation des mélanges de 1 partie en volume d'un concentré selon l'une quelconque des revendications 1 à 7 précédentes avec 1 à 10 parties en volume d'eau.

9. Emploi des émulsions selon la revendication 8 pour assurer la protection du bois contre l'attaque des champignons et/ou des insectes xylophages.

**Patentansprüche:**

1. In Wasser emulgierbare flüssige Konzentrate, die enthalten:

— ein in Wasser unlösliches Material, das 15 bis 40 Gew.-% der Konzentrate ausmacht,

— und ein flüssiges Lösungsmilieu, bestehend aus zumindest einem 30 bis 75 Gew.-% der Konzentrate ausmachenden organischen Lösungsmittel für das aktive Material, einem 5 bis 25 Gew.-% der Konzentrate ausmachenden Emulgiermittel und gegebenenfalls zumindest einem 0 bis 20 Gew.-% der Konzentrate ausmachenden Öl und/oder Fixiermittel,

welche Konzentrate dadurch gekennzeichnet sind, daß

— das aktive Material aus zumindest einer fungiziden Substanz, ausgewählt aus den Halogenderivaten

von Phenol, gegebenenfalls in Kombination mit zumindest einer in Wasser unlöslichen insektiziden Substanz, besteht,

— und das Emulgiermittel aus zumindest einer anionischen grenzflächenaktiven Substanz aus der Gruppe:

(a) Schwefelsäureester der Formel:

$$R{-}(OCH_2CH_2)_n{-}OSO_3M \qquad (I)$$

in welcher:

der Substituent R einen gesättigten oder ungesättigten kohlenstoffhaltigen Rest aliphatischen Ursprungs (geradkettig oder verzweigt), der ein oder mehrere Heteroatome enthalten kann, darstellt;

n eine auf einen solchen Wert festgelegte Zahl bedeutet, daß der HLB-Wert der grenzflächenaktiven Substanz einer ganzen Zahl von 10 bis 16 entspricht;

M ein Rest anorganischen oder organischen Ursprungs und derart ausgewählt ist, daß die grenzflächenaktive Substanz in dem zu emulgierenden Konzentrat und in Wasser löslich ist,

(b) und ortho-Phosphorsäureestern der Formel:

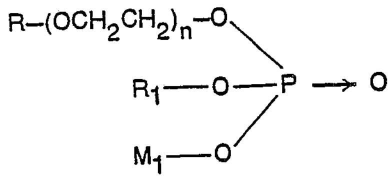

(II)

in welcher:

der Substituent und n die oben für die Formel (I) angegebene Bedeutung haben;

$R_1$ entweder einen Rest $M_1$ oder einen der Reste $R{-}(OCH_2CH_2)_n{-}$ darstellt, wobei die Reste $R_1$ und $R{-}(OCH_2CH_2)_n{-}$ gleich oder verschieden sein können;

$M_1$ ein Wasserstoffatom oder ein Rest der zuvor für M in der Formel (I) angegebenen Bedeutung ist, wobei die beiden Reste $M_1$ (wenn $R_1 = M_1$) gleich oder voneinander verschieden sein können, besteht.

2. Konzentrate nach Anspruch 1, dadurch gekennzeichnet, daß man als Emulgiermittel Verbindungen der Formeln (I) und (II) einsetzt, in welchen:

der Substituent R darstellt: einen geradkettigen Alkylrest mit 6 bis 20 Kohlenstoffatomen; einen Alkylcarbonylrest, der einen Alkylrest der gleichen Gattung aufweist; einen Alkylphenylrest, dessen Alkylrest eine geradkettige Struktur mit 6 bis 20 Kohlenstoffatomen hat,

M (Formel I) ein Ammoniumrest oder ein Natriumatom ist,.

$M_1$ (Formel II) ein Wasserstoffatom, ein Ammoniumrest oder ein Natriumatom ist.

3. Konzentrate nach einem der Ansprüche 1 und 2, dadurch gekennzeichnet, daß das aktive Material gebildet ist durch Kombination von:

— 70 bis 98 Gew.-% Fungizid(en), bestehend aus: Tetrachlorophenol und/oder Pentachlorphenol,

— mit 30 bis 2 Gew.-% Insektizid(en), bestehend aus: Lindan und/oder Phosalon und/oder Sevin und/oder Permethrin und/oder Fenvalerat.

4. Konzentrate nach einem der Ansprüche 1 bis 3, dadurch gekennzeichnet, daß das Lösungsmittel oder die Lösungsmittel des aktiven Materials aus der Gruppe stammen, bestehend aus: den flüssigen aromatischen Kohlenwasserstoffen oder Mischungen von aromatischen Kohlenwasserstoffen, die unmittelbar aus der Destillation von Erdöl stammen; einwertigen Alkoholen, Glykolen oder Polyolen oder ihren Alkanoläthern; aliphatischen Ketonen; Estern; Amiden.

5. Konzentrate nach Anspruch 4, dadurch gekennzeichnet, daß man Mischungen eines aromatischen Kohlenwasserstoffs (oder einer Mischung aromatischer Kohlenwaserstoffe) mit einem einwertigen Akohol oder einem Glykol oder einem Keton oder einem Ester einsetzt.

6. Konzentrate nach einem der Ansprüche 1 bis 3 und 5, dadurch gekennzeichnet, daß das Lösungsmilieu neben dem Emulgiermittel eine der im Anspruch 5 angegebenen Lösungsmittelmischungen und ein oder mehrere Fixiermittel enthält.

7. Konzentrat nach einem der Ansprüche 1 bis 4, dadurch gekennzeichnet, daß das Lösungsmilieu neben dem Emulgiermittel eines der im Anspruch 4 angegebenen Lösungsmittel zusammen mit einer Mischung eines oder mehrerer Öle mit einem oder mehreren Fixiermitteln enthält.

8. Stabile Emulsionen, dadurch gekennzeichnet, daß sie hergestellt werden durch einfaches Verrühren von Mischungen von 1 Volumsteil eines Konzentrats nach einem der vorhergehenden Ansprüche 1 bis 7 mit 1 bis 10 Volumsteilen Wasser.

9. Verwendung der Emulsionen nach Anspruch 8 zum Schützen von Holz gegen den Befall durch Pilze und/oder holzzerstörende Insekten.

**Claims**

1. Water-emulsifiable liquid concentrates which comprise:

— a water-insoluble active substance representing 15 to 40% by weight of the concentrates,

— and a liquid solvent medium consisting of at least one organic solvent for the active substance representing 30 to 75% by weight of the concentrates, an emulsifying agent representing 5 to 25% by weight of the concentrates and optionally at least one oil and/or at least one fixing agent representing 0 to 20% by weight of the concentrates,

the said concentrates being characterised in that:

— the active substance consists of at least one fungicidal substance chosen from halogenated phenol derivatives which is optionally associated with at least one water-insoluble insecticidal substance,

— and the emulsifying agent consists of at least one anionic surfactant belonging to the group consisting of:

(a) sulphuric ester of formula:

$$R—(OCH_2CH_2)_n—OSO_3M \qquad (I)$$

in which:

— the substituent R denotes a saturated or unsaturated carbonaceous radical which may contain one or more hetero atoms and is aliphatic (linear or branched), alicyclic or aromatic in origin;

— n denotes a number fixed at a value such that the HLB of the surfactant corresponds to a number ranging from 10 to 16;

— M is a residue of inorganic or organic origin, chosen so that the surfactant may be soluble in the concentrate to be emulsified and in water,

(b) and orthophosphoric esters of formula:

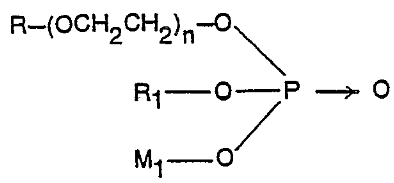

(II)

in which:

— the substituent R and n have the meanings given above in formula (I);

— $R_1$ denotes either an $M_1$ residue, or one of the radicals $R—(OCH_2CH_2)_n—$, the radicals $R_1$ and $R—(OCH_2CH_2)_n—$ being capable of being identical or different;

— $M_1$ is a hydrogen atom or a residue having the meaning given above for M in formula (I), the two residues $M_1$ (when $R_1 = M_1$) being capable of being identical or different.

2. Concentrates according to Claim 1, characterised in that use is made, as emulsifying agent, of compounds of formulae (I) and (II) in which:

— the substituent R denotes: a linear alkyl radical containing from 6 to 20 carbon atoms; an alkylcarbonyl radical containing an alkyl residue of the same kind; or an alkylphenyl radical in which the alkyl residue has a linear structure containing from 6 to 20 carbon atoms,

— M (formula I) is an ammonium residue or a sodium atom,

— $M_1$ (formula II) is a hydrogen atom, an ammonium residue or a sodium atom.

3. Concentrates according to either of Claims 1 and 2, characterised in that the active substance consists of the association of:

— 70% to 98% by weight of fungicide(s) consisting of: tetrachlorophenol and/or pentachlorophenol,

— with 30% to 2% by weight of insecticide(s) consisting of: lindane and/or phosalone and/or sevin and/or permethrin and/or fenvalerate.

4. Concentrates according to any one of Claims 1 to 3, characterised in that the solvent or the solvents for the active substance is/are taken from the group consisting of: liquid aromatic hydrocarbons or mixtures of aromatic hydrocarbons derived directly from oil distillation, monoalcohols, glycols or polyols or their alkanol ethers, aliphatic ketones, esters and amides.

5. Concentrates according to Claim 4, characterised in that use is made of mixtures of an aromatic hydrocarbon (or of a mixture of aromatic hydrocarbons) with a monoalcohol or a glycol or a ketone or an ester.

6. Concentrates according to any one of Claims 1 to 3 and 5, characterised in that the solvent medium contains, in addition to the emulsifying agent, one of the solvent mixtures referred to in Claim 5 and one or more fixing agents.

7. Concentrates according to any one of Claims 1 to 4, characterised in that the solvent medium contains, in addition to the emulsifying agent, one of the solvents referred to in Claim 4 in association with a mixture of one or more oils with one or more fixing agents.

8. Stable emulsions characterised in that they are prepared by simple stirring of the mixtures of 1 part by volume of a concentrate according to any one of the preceding Claims 1 to 7 with 1 to 10 parts by volume of water.

9. Use of the emulsions according to Claim 8 to protect timber against attack by xylophagous insects and/or fungi.